(19) Europäisches Patentamt / European Patent Office / Office européen des brevets

(11) **EP 3 657 623 A1**

(12) **EUROPEAN PATENT APPLICATION**

(43) Date of publication:
**27.05.2020 Bulletin 2020/22**

(51) Int Cl.:
*H02J 5/00* (2016.01)   *G06Q 50/06* (2012.01)

(21) Application number: **18207443.5**

(22) Date of filing: **21.11.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **ABB Schweiz AG**
**5400 Baden (CH)**

(72) Inventors:
• **Schmitt, Susanne**
  **69115 Heidelberg (DE)**
• **Giuntoli, Marco**
  **68526 Ladenburg (DE)**

(54) **NETWORK SYSTEM FOR HYBRID AC/DC GRIDS**

(57)   A network system is provided, comprising a hybrid AC/DC-grid. The hybrid AC/DC-grid in turn comprises an AC grid, a DC grid, and at least one converter configured to connect the AC grid with the DC grid. The network system further comprises a network control component, configured to control the hybrid AC/DC-grid by applying a full non-linear security-constrained optimal power flow model.

Fig. 1

**Description**

TECHNICAL FIELD

The invention relates to a network system comprising a hybrid AC/DC-grid and a network control component, configured to control the hybrid AC/DC-grid by applying a full non-linear security-constrained optimal power flow model, a method for controlling a hybrid AC/DC-grid, a program element and a computer readable medium.

BACKGROUND

Traditionally, electrical power is transmitted over AC grids because of the easy conversion of the voltage amplitudes using transformators. Usually, more or less centralized power plants produce the current which is transmitted over an AC grid to stations using an up-conversion of the voltage at the power plants and a down conversion at the stations. Different stages may be applied.

DC on the other side provides less losses and are more suited and more cost-efficient for long distances. Nowadays, the DC voltage conversion is relatively easy using power switches based on, e.g. inverters. Further, DC is easier to handle and to control compared to AC because it has no reactive power, which has, e.g., an effect on the reaction time of control measures.

Renewable energy sources often make use of the DC power transmission technology. The increasing number renewable energy sources, which are for a high percentage spread land-based or from off shore wind parks overland, and therefore often have to be transmitted over long distances resulting in a high number of DC grids. Multi-terminal systems connect a plurality of DC grids. Multiterminal systems are difficult to realize using line commutated converters because reversals of power are effected by reversing the polarity of DC voltage, which affects all converters connected to the system.

With a hybrid AC/DC infrastructure existing and new grids may be connected together, and the benefits of each grid type may be exploited. However, the grids may interfere each other which may result in unbalanced power distribution and unwanted loads in the network components.

SUMMARY

The problem is solved by the subject-matter of the independent claims. Embodiments are provided by the dependent claims, the following description and the accompanying figures.

According to an aspect, a network system is provided, comprising a hybrid AC/DC-grid. The hybrid AC/DC-grid in turn comprises an AC grid, a DC grid, and at least one converter configured to connect the AC grid with the DC grid. The network system further comprises a network control component, configured to control the hybrid AC/DC-grid by applying a full non-linear security-constrained optimal power flow model.

The AC and the DC grids may be high voltage grids for dispatching power from power sources to consumers. Power sources may be generators of power plants or generators of renewable energy sources as, e.g., wind turbines or solar plants. An AC/DC converter may be positioned between an AC node of the AC grid and a DC node of the DC grid. The AC/DC converter may be able to convert in both directions, i.e., AC into DC or DC into AC. For example, an AC generator provides AC to the AC node of a local AC grid to which further components are connected. The AC current in the AC node is converted by the AC/DC converter to DC with a certain voltage magnitude so that the power may, as an example, be transmitted via long distance lines to a further converter which converts the DC into AC and provides the DC power to a further local AC grid. The grids have to be supervised, e.g., in terms of admissible maximum and minimum power, currents and voltages, variations of the currents and voltages, the ratio of active power and reactive power, etc. The relations of the power and further parameters in the AC and DC grid are in general non-linear due to, e.g. the phase rotations of the current and voltage in the AC grid, phase rotations by tap changers, or due to, e.g., quadratic terms when calculating the active or the reactive power.

The network control component in the security constrained non-linear network therefore applies an electrical model taking into account the power transfer in each component expressed in equations for the currents, voltages and power. These parameters are limited to maximum and/or minimum values so that the security constraints are fulfilled.

According to an embodiment, a network system is provided, wherein the non-linear security-constrained optimal power flow model comprises an N-k security criterion, where k is an positive integer value.

A critical situation may occur in case of a sudden outage of a component which may lead to overcurrent or overvoltage. E.g., if one of the branches connected to a node fails, the remaining branches have not to be loaded out of their limits. In another example, a generator may fail. Then, there has to be a so called spinning reserve, i.e. margin. Such a requirement is considered in a security assessment applying an N-1 criterion in a power system analysis. The N-1 criterion is a deterministic method in the security assessment to ensure that the system remains in a safe state or that the system is transferred into a safe state in the case of one outage. The N-1 criterion may also be expanded to N-2 or, generally spoken, to N-k, where k is an positive integer, covering cases where more than a single outage occur.

According to an embodiment, the N-k security criterion comprises a preventive mode and/or a corrective mode. In a preventive mode, the maximum and minimum values for the voltages, currents, active and reactive power, the maximum or minimum values are to be chosen such that an outage of one component does not lead to a violation of the constraints regarding further components to fulfill the security constraints. These variables are controlled either directly or indirectly in such a way that the constraints for the remaining operable components are still fulfilled and the system remains in a stable and secure state. In a corrective mode, the constraints may be violated in case of an outage. However, the variables are controlled such that, e.g., within a pre-defined time span, their values are lead inside their constraint limits again. Therefore, by controlling the variables in a corrective way a stable and secure state of the network system is obtained.

According to an embodiment, a security criterion defines at least one constraint on at least one of the following variables: active power, reactive power, voltage magnitude or phase, current magnitude or phase. Depending on the type of component, including whether it is an AC or an DC component, different variables may be controlled. E.g., for an AC branch, there may exist an active power constraint, an reactive power constraint and a constraint for the phase difference between the current and the voltage, whereas for a DC branch, there may exist a constraint regarding the active power only.

According to an embodiment, the hybrid AC/DC-grid comprises further a plurality of grid components of different type; wherein the types of the grid components include busbars, lines, generators, transformers, breakers, storage devices, shunts, AC/DC converters, or loads; and wherein the network control component is configured to estimate the hybrid AC/DC-grid state defined by state variables of the hybrid AC/DC-grid components for determining the optimal power flow. The model takes into account each of the components; and for each component the state of the component is estimated. The state may be a vector or a matrix comprising the state variables. The state may furthermore be calculated in a deterministic and/or stochastic way, and may be a result of a control loop or a filter loop.

According to an embodiment the state variables are complex voltage levels, power flows, transformer status, breaker status, generator status, or converter status or a combination thereof. Complex voltage levels are, e.g., the AC or DC magnitudes of the voltages regarding also their phase or the phase differences between the voltage and the current; and power flows are signed, i.e. directional, active or reactive power levels of each of the components. Next to these state variables, the state comprises the status of transformer, breaker, generator and/or converter, comprising current tap changer level, on/off-status, etc.

According to an embodiment, the network control component is configured to adjust the hybrid AC/DC-grid state by control variables for providing the optimal power flow. The control variables are independent whereas the above-mentioned AC/DC-grid state variables depend on the control variables.

According to an embodiment, the control variables define setpoints for generator active power, generator reactive power, converter active power, and converter reactive power, transformer tap magnitude or phase, Flexible AC Transmission Systems (FACTS) status and storage control.

According to an embodiment, the network control component is configured to apply a statistical model for loads or renewable generation for predetermining the optimal power flow. Statistical models may include a possible non-deterministic behavior of the grid, taking into account, e.g., a different power consumption or power generation as, e.g., solar power at different times of a day and allows thus for estimating control variables in advance.

According to an embodiment, the optimal power flow is based on an optimization criterion, wherein the optimization criterion is one of: minimal generation cost, minimal losses, minimal voltage angle differences, minimal voltage amplitude deviation, minimal reactive power in the AC grid, or minimal redispatch cost, or on an combination thereof or minimum number of control actions. In other words, a single criterion, or a combination of two or more criterions may be selected, e.g., by the operator. The optimization may follow a priority of the criterions, which may be pre-determined or also be determined by the operator, or may be an overall optimization such as obtained by the least squares method.

According to an aspect, a network control component of a network system configured to control a hybrid AC/DC-grid by applying a full non-linear security-constrained optimal power flow model is provided. That is, the equations of the model for determining the state and control variables of the components of the grid are non-linear or kept non-linear, respectively. The equations comprise, e.g., the power balance of the active and reactive power in an AC node taking into account, e.g., the lines, power transformers, and shunt components, and further the generators, the power from the AC/DC converters and the total load connected to the node. For the active power in a DC node, e.g., power converters and lines connected to the node may be taken into account. The voltage magnitude and phase may be constrained to minimum and maximum values. The model may further comprise constraint equations for the maximum and minimum active and reactive power of the generator. Branches, which are generic passive components that transfer current from one node to another, may be modeled according to Kirchhoff's circuit law using, e.g. a double bi-pole model. The double bi-pole model may also take into account tap changers, modelled by a gain and a complex rotation. Tap changer control variables may defined voltages and gains constraint to minimum and maximum values. Converters transfer power in both directions, i.e. from AC to DC grids or vice versa. The converter model may take into account the power balance between the AC and DC ports and the losses caused by the electronic devices. Active and reactive power may be control variables which are constrained to minimum and maximum values.

According to an example, the security-constraint of the network control element comprises an N-k, e.g., an N-1 security criterion. For example, regarding the control variables, it may be possible to define a finite deviation of the control variables setpoints in order to compensate an outage. The deviation is dependent on the contingency that has happened so that a corrective action is performed to remove the violation. By doing this, a corrective security-constrained power flow is obtained. A further N-1 method may be a preventive security-constrained optimal power flow in which a single value for each control variable is defined. The state constraints remain fulfilled, even if an outage occurs so that no corrective action is necessary.

According to an aspect, a method for controlling a hybrid AC/DC-grid in a network system described above is provided, the method comprising the steps: defining a set of optimization criterions; estimating state variables of the hybrid AC/DC-grid by applying a full non-linear security-constrained optimal power flow model; adjusting control variables of the hybrid AC/DC-grid according to a full non-linear security-constrained optimal power flow model; wherein the set of optimization criterions comprises: minimal generation cost, minimal losses, minimal voltage angle differences, minimal voltage amplitude deviation, minimal reactive power in the AC grid, or minimal redispatch cost, or a combination thereof or minimum number of control actions. The method includes security-constraints that take into account an N-1, or generally an N-k criterion where k is an positive integer number. The security constraints furthermore take into account limits for active and reactive power levels, complex voltage levels and currents by applying, e.g. inequality equations defining maximum and minimum values.

In a first example of an N-1 case, a generator fails: in order to maintain the supply-demand balance the other generators in the grid have to compensate for the outage and thus there may be higher power flows over long distances in the grid. This may lead to overloaded lines and violations of the admissible voltage band, i.e., the corresponding state variables would violate their limits. In a second example of an N-1 case, a line or a transformer fails: In this case, power flows have to be redirected over other lines, which may also lead to overloaded lines as described above and may lead to constraint violations. The N-1 criterion assesses the security risk and the system is configured such the constraints are either not violated or fulfilled due to a corrective action.

According to an embodiment, in the method for controlling a hybrid AC/DC-grid in a network system, the step of estimating state variables of the hybrid AC/DC-grid further comprises applying a statistical load model; and the step of adjusting control variables of the hybrid AC/DC-grid comprises predetermining the control variables for optimizing the power flow in advance.

According to an aspect, a program element, which, when being executed by a processor of a network control component, instructs the hybrid AC/DC-grid to perform the steps of the method described above.

According to an aspect, a computer readable medium is provided on which such a program element is stored.

These and other features, aspects and advantages of the present invention will become better understood with reference to the accompanying figures and the following description.

BRIEF DESCRIPTION OF THE DRAWINGS

Fig. 1 shows a block diagram of a network system according to an embodiment.
Fig. 2 shows a block diagram of a method according to an embodiment.
Fig. 3 shows an electric circuit model for branches.
Fig. 4 shows a diagram with the DC voltage for different types of control for an AC/DC converter.

DETAILED DESCRIPTION

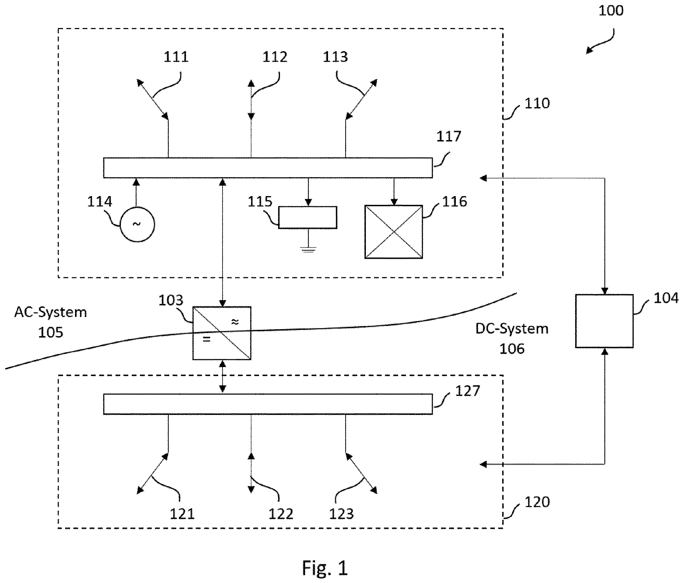

Fig. 1 shows a network system 100 with an AC grid 110 and a DC grid 120. A voltage source converter (VSC) 103, connected to an AC node and to a DC node 127 connects the AC grid and the DC grid. A node is a generic declaration to define a junction between two or more items. To the AC node only the AC components can be connected, and to the DC node only DC components can be connected. The converter 103 is part of the AC system 105 and of the DC system 106. The hybrid AC/DC grid comprises therefore the AC grid 110, the DC grid 120, and the converter 103. The network system further comprises a network control component 104 configured to control the hybrid AC/DC-grid 101, 102, 103. The AC grid 110 comprises further branches 111, 112, 113 (power transformers, cables, overhead lines), a generator 114, a shunt circuit 115 (constant admittance), and a load 116. The DC grid in this example may further comprise branches 121, 122, and 123. The power flow may take place from the generator 114 to the AC branches 111, 112, 113, to the load 116 (constant active and reactive power), and via converter 103 to the DC node 127 and the DC branches 121, 122, and 123. The power may also flow from the DC grid to the AC grid as illustrated by the bi-directional arrows in Fig. 1. The positive reference is used when the power goes inside the node. The network control component may collect the state information of the grid components and set control variables of the components to control by applying a full non-linear security-constrained optimal power flow model so that an optimization. In Fig. 1 only one component is shown for each component type. However, the network may comprise further components, and especially more than one component of a type, e.g., converter.

The components in Fig. 1 may be modelled, for example, by a one-phase-system model as described in the following as an example.

With the one-phase-system model a mono-phase system or a multiphase system can be evaluated. In order to evaluate a multiphase system, the system must be balanced and symmetric to consider only the positive sequence using, e.g. the Fortescue transformation. The model may not use the differential time dependent components inside the power balance equations so that only (sinusoidal) steady state or sequential-time (sinusoidal) steady state analyses can be performed. The variables and the equations may be expressed in complex polar form.

The variables are split into two parts: control (or independent) set of variables as, e.g., power setpoint (P and Q) for active or controlled device, tap changer and/or phase changer position for power transformers and state (or dependent) set of variables as, e.g., voltage magnitude and phase for every AC and DC node;

In the following an exemplary model for the network system components is given.

Nodes

An AC node may be modelled by an active power balance equation and an reactive power equation. The active power balance can be expressed by the following equation:

$$\underbrace{-p\left(v_{n,AC,c}, \vartheta_{n,c}, \delta_{b,c}, \vartheta_{b,c}\right)}_{\substack{network\ components \\ + \\ shunts\ components}} + p_{g,c} + p_{h,AC,c} - p_n = 0$$

wherein the first term regards the power that flows from the node into the branches (line, power transformers and shunt components); the second term regards the active power coupled in from the generators connected to the node; the third component regards the power from the AC/DC converters connected to the node and the last component is the total load.

In the same way, the reactive power balance may be defined:

$$\underbrace{-q\left(v_{n,AC,c}, \vartheta_{n,c}, \delta_{b,c}, \vartheta_{b,c}\right)}_{\substack{network\ components \\ + \\ shunts\ components}} + q_{g,c} + q_{h,c} - q_n = 0$$

For the DC nodes, the balance equation for the reactive power does not exist and therefore, there is only one single equation for the node representing the power converters and lines connected to the node.

$$\underbrace{-p\left(v_{n,DC,c}\right)}_{network\ components} + p_{h,DC,c} = 0$$

Regarding the voltage magnitude and phase, for each AC node the following inequality constraints may be defined:

$$v_{n,AC,min} \leq v_{n,c} \leq v_{n,AC,max}$$
$$-2\pi \leq \vartheta_{n,c} \leq 2\pi$$

Generators

The generator capability is defined as a surface with the following limits (inequality constraints), where $p_{gc}$ and $q_{gc}$ are the control variables:

$$p_{g,min} \leq p_{g,c} \leq p_{g,max}$$

$$q_{g,min} \leq q_{g,c} \leq q_{g,max}$$

$$p_{g,c}^2 + q_{g,c}^2 - s_g^2 \leq 0$$

$$q_{g,c} - m_{g,pos}p_{g,c} - z_{g,pos} \leq 0$$

$$-q_{g,c} + m_{g,neg}p_{g,c} + z_{g,neg} \leq 0$$

Branches

A branch is a generic passive component able to transfer current from one node to another according to the Kirchhoft's circuit laws. The double bi-pole model with PI scheme may be used. This model can be usefully applied for overhead lines, cables, power transformers (with and without tap changer and/or phase shifter) and for DC overhead lines and cables. The tap changer and phase shifter are installed on node "from" and both can be modelled with a pure gain $\delta$ and a complex rotation $e^{j\vartheta}$. For a generic branch $b$, contingency $c$ and defining $i$ as node "from" and $j$ as node "to", is possible to define the relationship between the current and voltage (both in complex/matrix format):

$$\begin{bmatrix} \overline{i_i} \\ \overline{i_j} \end{bmatrix} = \begin{bmatrix} \overline{y_{ii}}\delta_{b,c}^2 & \overline{y_{ij}}\delta_{b,c}e^{j\vartheta_{b,c}} \\ \overline{y_{ji}}\delta_{b,c}e^{-j\vartheta_{b,c}} & \overline{y_{jj}} \end{bmatrix}\begin{bmatrix} \overline{v_i} \\ \overline{v_j} \end{bmatrix}$$

Exploiting the symmetry of the model, the matrix component with ii subscript is equal to the component $jj$ and, in the same way, the component $ij$ is equal to the component $ji$. Starting from the input parameters, it is possible to write the components that describe the double bi-pole with the following transformation:

$$\begin{cases} \overline{y_{ii}} = \overline{y_{jj}} = g_{ii} + jb_{ii} & \begin{aligned} g_{ii} &= \frac{g_b}{2} + \frac{r_b}{r_b^2 + x_b^2} \\ b_{ii} &= \frac{b_b}{2} - \frac{x_b}{r_b^2 + x_b^2} \end{aligned} \\ \overline{y_{ij}} = \overline{y_{ji}} = g_{ij} + jb_{ij} & \begin{aligned} g_{ij} &= -\frac{r_b}{r_b^2 + x_b^2} \\ b_{ij} &= +\frac{x_b}{r_b^2 + x_b^2} \end{aligned} \end{cases}$$

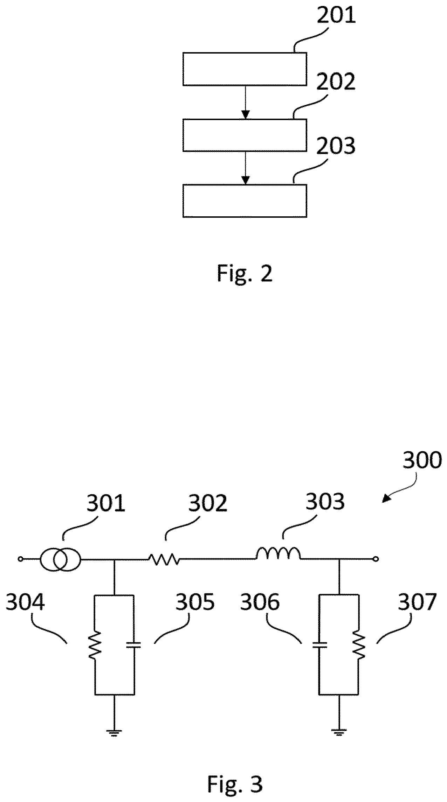

The double bi-pole model can be represented with the electric circuit 300 shown in Figure 3 comprising a current source 301 with gain $\delta$ and complex rotation $e^{j\vartheta}$, resistance $r_b$ 202, reactance $x_b$ 303, suceptances $b_b/2$ 305, 307 and conductances $g_b/2$ 304, 307.

For the tap changer control variables and/or for the phase shifter control variable, the following inequality constraints are dfined according to the limits of the power transformer:

$$\vartheta_{b,min} \leq \vartheta_{b,c} \leq \vartheta_{b,max}$$

$$\delta_{b,min} \leq \delta_{b,c} \leq \delta_{b,max}$$

In general, defining $\upsilon$ as voltage magnitude and $\vartheta$ as phase on node $i$ and $j$ for the contingency case $c$, is possible to define the currents that are flowing on these nodes as follow (in real and imaginary parts):

$$\Re\{\overline{i_i}\} = v_i\delta_{b,c}^2\big(g_{ii}cos(\vartheta_i) - b_{ii}sin(\vartheta_i)\big)$$
$$+ v_j\delta_{b,c}\Big(g_{ij}\big(cos(\vartheta_j)cos(\vartheta_{b,c}) - sin(\vartheta_j)sin(\vartheta_{b,c})\big)$$
$$- b_{ij}\big(sin(\vartheta_j)cos(\vartheta_{b,c}) + cos(\vartheta_j)sin(\vartheta_{b,c})\big)\Big)$$

$$\Im\{\overline{i_i}\} = v_i\delta_{b,c}^2\big(g_{ii}sin(\vartheta_i) + b_{ii}cos(\vartheta_i)\big)$$
$$+ v_j\delta_{b,c}\Big(g_{ij}\big(sin(\vartheta_j)cos(\vartheta_{b,c}) - cos(\vartheta_j)sin(\vartheta_{b,c})\big)$$
$$+ b_{ij}\big(cos(\vartheta_j)cos(\vartheta_{b,c}) - sin(\vartheta_j)sin(\vartheta_{b,c})\big)\Big)$$

$$\Re\{\overline{i_j}\} = v_j\big(g_{ii}cos(\vartheta_j) - b_{ii}sin(\vartheta_j)\big)$$
$$+ v_i\delta_{b,c}\Big(g_{ij}\big(cos(\vartheta_i)cos(\vartheta_{b,c}) + sin(\vartheta_i)sin(\vartheta_{b,c})\big)$$
$$- b_{ij}\big(sin(\vartheta_i)cos(\vartheta_{b,c}) - cos(\vartheta_i)sin(\vartheta_{b,c})\big)\Big)$$

$$\Im\{\overline{i_j}\} = v_j\big(g_{ii}sin(\vartheta_j) + b_{ii}cos(\vartheta_j)\big)$$
$$+ v_i\delta_{b,c}\Big(g_{ij}\big(sin(\vartheta_i)cos(\vartheta_{b,c}) - cos(\vartheta_i)sin(\vartheta_{b,c})\big)$$
$$+ b_{ij}\big(cos(\vartheta_i)cos(\vartheta_{b,c}) + sin(\vartheta_i)sin(\vartheta_{b,c})\big)\Big)$$

The square of magnitude of current is equal to (inequality constraints):

$$\left|\overline{i_i}\right|^2 = f\big(v_i, v_j, \vartheta_i, \vartheta_j, \delta_{b,c}, \vartheta_{b,c}\big) = \Re\{\overline{i_i}\}^2 + \Im\{\overline{i_i}\}^2 \leq i_{b,max}^2$$

$$\left|\overline{i_j}\right|^2 = f\big(v_i, v_j, \vartheta_i, \vartheta_j, \delta_{b,c}, \vartheta_{b,c}\big) = \Re\{\overline{i_j}\}^2 + \Im\{\overline{i_j}\}^2 \leq i_{b,max}^2$$

Due to the presence of the tap changer and the transversal components, the square of magnitude of current *i* can be different from the square of magnitude of current *j*.

In the same way, it is possible to define the active and reactive power that flows through the branch with the following equations:

$$p_{ij} = g_{ii}v_i^2\delta_{b,c}^2 + v_iv_j\delta_{b,c}\Big(\big(g_{ij}cos(\vartheta_{b,c}) - b_{ij}sin(\vartheta_{b,c})\big)cos(\vartheta_i - \vartheta_j)$$
$$+ \big(g_{ij}sin(\vartheta_{b,c}) + b_{ij}cos(\vartheta_{b,c})\big)sin(\vartheta_i - \vartheta_j)\Big) \leq p_{b,max}$$

$$q_{ij} = -b_{ii}v_i^2\delta_{b,c}^2 + v_iv_j\delta_{b,c}\Big(\big(g_{ij}cos(\vartheta_{b,c}) - b_{ij}sin(\vartheta_{b,c})\big)sin(\vartheta_i - \vartheta_j)$$
$$- \big(g_{ij}sin(\vartheta_{b,c}) + b_{ij}cos(\vartheta_{b,c})\big)cos(\vartheta_i - \vartheta_j)\Big)$$

$$p_{ji} = g_{jj}v_j^2 + v_jv_i\delta_{b,c}\left(\left(g_{ji}cos(\vartheta_{b,c}) + b_{ji}sin(\vartheta_{b,c})\right)cos(\vartheta_j - \vartheta_i)\right.$$
$$\left. + \left(-g_{ji}sin(\vartheta_{b,c}) + b_{ji}cos(\vartheta_{b,c})\right)sin(\vartheta_j - \vartheta_i)\right) \leq p_{b,max}$$

$$q_{ji} = -b_{jj}v_j^2 + v_jv_i\delta_{b,c}\left(\left(g_{ji}cos(\vartheta_{b,c}) + b_{ji}sin(\vartheta_{b,c})\right)sin(\vartheta_j - \vartheta_i)\right.$$
$$\left. - \left(-g_{ji}sin(\vartheta_{b,c}) + b_{ji}cos(\vartheta_{b,c})\right)cos(\vartheta_j - \vartheta_i)\right)$$

The square of the apparent power can be calculated as follow (inequality constraints):

$$s_{ij}^2 = f\left(v_i, v_j, \vartheta_i, \vartheta_j, \delta_{b,c}, \vartheta_{b,c}\right) = p_{ij}^2 + q_{ij}^2 \leq s_{b,max}^2$$

$$s_{ji}^2 = f\left(v_i, v_j, \vartheta_i, \vartheta_j, \delta_{b,c}, \vartheta_{b,c}\right) = p_{ji}^2 + q_{ji}^2 \leq s_{b,max}^2$$

The difference between $s_{ij}$ and $s_{ji}$ results from the power loss inside the branch. According to the positive direction of the power, the active and reactive losses can be calculated as sum of the power from node *i-j* and node *j-i*. In particular:

$$p_{loss} = p_{ij} + p_{ji} = +g_{ii}\left(v_i^2\delta_{b,c}^2 + v_j^2\right) + 2g_{ij}v_iv_j\delta_{b,c}\left(cos(\vartheta_{b,c})cos(\vartheta_i - \vartheta_j) + sin(\vartheta_{b,c})sin(\vartheta_i - \vartheta_j)\right)$$

$$q_{loss} = q_{ij} + q_{ji} = -b_{ii}\left(v_i^2\delta_{b,c}^2 + v_j^2\right) - 2b_{ij}v_iv_j\delta_{b,c}\left(cos(\vartheta_{b,c})cos(\vartheta_i - \vartheta_j) + sin(\vartheta_{b,c})sin(\vartheta_i - \vartheta_j)\right)$$

Moreover, for each branch, it is possible to define a limit regarding the deviation of the phase between the node *i* and the node *j*. This inequality constraint is represented by the following equation:

$$\Delta\vartheta_{b,min} \leq \vartheta_i - \vartheta_j \leq \Delta\vartheta_{b,min}$$

For the DC branches, only the longitudinal resistance $r_b$ has been considered. In this case, the above equations can be simplified as follow (inequality constraints):

$$\Re\{\overline{i_i}\} = g_{ii}v_i + g_{ij}v_j = g_{ii}\left(v_i - v_j\right) \leq i_{b,max}$$

$$\Im\{\overline{i_i}\} = 0$$

$$\Re\{\overline{i_j}\} = g_{ii}v_j + g_{ij}v_i = g_{ii}\left(v_j - v_i\right) \leq i_{b,max}$$

$$\Im\{\overline{i_j}\} = 0$$

The power can then expressed (inequality constraints) in the following way:

$$p_{ij} = g_{ii}v_i^2 + g_{ij}v_iv_j = g_{ii}\left(v_i^2 - v_iv_j\right) \leq p_{b,max}$$

$$p_{ji} = g_{ii}v_j^2 + g_{ij}v_iv_j = g_{ii}\left(v_j^2 - v_jv_i\right) \le p_{b,max}$$

Finally, the power loss inside the branch can be calculated:

$$p_{loss} = p_{ij} + p_{ji} = g_{ii}\left(v_i^2 + v_j^2 - 2v_iv_j\right)$$

Converters

The converter station is the component that is able to transfer power in both directions, from AC to DC grids and from DC grids into AC grids. The converter model takes into account the power balance between the AC and DC ports with the losses due to the power electronic devices. The converter capability is defined as a surface with the following limits:

$$p_{h,min} \le p_{h,AC,c} \le p_{h,max}$$

$$q_{h,min} \le q_{h,c} \le q_{h,max}$$

$$i_{h,AC,c}^2 \le i_{h,max}^2 \quad ,$$

where $p_{h,AC,c}$ and $q_{h,c}$ are the control variables. The power balance equation is written in the following equation. The state variable $p_{h,AC,c}$, that takes the losses inside the converter into account, is always greater than zero. This means that the power from AC or DC side must be negative (like a load) in order to supply the losses.

$$p_{h,AC,c} + p_{h,DC,c} + p_{h,loss,c} = 0$$

The power losses are calculated by the empiric formula that makes a relationship between $i_{h,AC,c}$ and $p_{h,loss,c}$. The alpha, beta and gamma parameters for each converter come from a quadratic model.

$$\alpha_h + \beta_h i_{h,AC,c} + \gamma_h i_{h,AC,c}^2 - p_{h,loss,c} = 0$$

In order to evaluate $i_{h,AC,c}$ the following power balance equation is used, where the $v_{h,AC,c}$ is the voltage magnitude for that AC node where the converter is installed.

$$p_{h,AC,c}^2 + q_{h,c}^2 - 3v_{h,AC,c}^2 i_{h,AC,c}^2 = 0$$

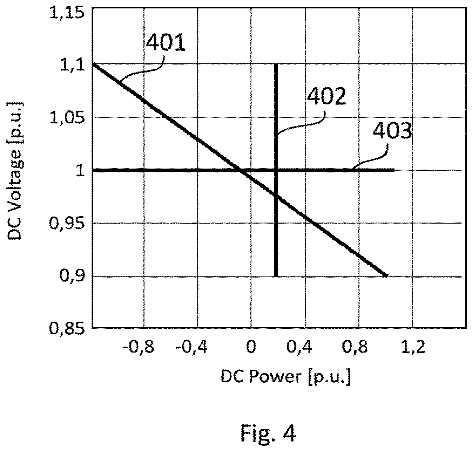

In order to explore different working configuration, for each converter is possible to define four operation modes that create a relationship between the DC power and the DC voltage. These operation modes are illustrated in Fig. 4 showing the DC power / DC voltage plane. The working configurations can be:

a) Free: there is no correlation between the DC power and voltage.
b) Droop control 401: there is a linear correlation between the DC power and DC voltage. The intercept and slope parameters can set independently.
c) Fixed voltage 403: this means that the DC voltage magnitude doesn't change due to DC power setpoint modification.
d) Fixed power 402: this means that the DC power level doesn't change due to DC voltage magnitude modification.

Moreover, for the DC node, where the converter is installed, it is mandatory to define if the node is a monopole or bi-pole. In case of a bi-pole definition, the power balance equations are modified in order to transfer the same power but with halved current values (dual symmetrical voltage). For the dual unsymmetrical voltage it is necessary to define two converters and two different DC nodes.

**Claims**

1. A network system (100), comprising:

   a hybrid AC/DC-grid; comprising

   an AC grid (101);
   a DC grid (102);
   at least one converter (103) configured to connect the AC grid (101) with the DC grid (102);

   a network control component (104), configured to control the hybrid AC/DC-grid (101, 102, 103) by applying a full non-linear security-constrained optimal power flow model.

2. The network system (100) according to claim 1, wherein the non-linear security-constrained optimal power flow model comprises an N-k security criterion; wherein k is a positive integer number; and wherein the N-k security criterion comprises a preventive mode and/or a corrective mode.

3. The network system (100) according to one of the preceding claims wherein a security criterion defines at least one constraint on at least one of the following variables: active power, reactive power, voltage magnitude or phase, current magnitude or phase.

4. The network system (100) according to one of the preceding claims, wherein the hybrid AC/DC-grid (101, 102, 103) comprises further a plurality of grid components of different type; wherein

   the types of the grid components include busbars, lines, generators, transformers, breakers, storage devices, shunts, AC/DC converters, or loads; and wherein
   the network control component is configured to estimate the hybrid AC/DC-grid state defined by state variables of the hybrid AC/DC-grid components for determining the optimal power flow.

5. The network system (100) according to claim 4, wherein the state variables are complex voltage levels, power flows, transformer status, breaker status, generator status, or converter status or a combination thereof.

6. The network system (100) according to one of the preceding claims, wherein the network control component (104) is configured to adjust the hybrid AC/DC-grid state by control variables for providing the optimal power flow; and wherein the control variables define setpoints for generator active power, generator reactive power, converter active power, and converter reactive power, transformer tap magnitude or phase, Flexible AC Transmission Systems (FACTS) status and storage control.

7. The network system (100) according to one of the preceding claims, wherein the network control component (104) is configured to apply a statistical model for loads (116) or renewable power generation for predetermining the optimal power flow.

8. The network system (100) according to one of the preceding claims, wherein the optimal power flow is based on an optimization criterion, wherein the optimization criterion is one of: minimal generation cost, minimal losses, minimal voltage angle differences, minimal voltage amplitude deviation, minimal reactive power in the AC grid (110), or minimal redispatch cost, or an combination thereof or minimum number of control actions.

9. The network control component (104) of a network system (102) according to one of the preceding claims, configured to control a hybrid AC/DC-grid (101, 102, 103) by applying a full non-linear security-constrained optimal power flow.

10. A method (200) for controlling a hybrid AC/DC-grid (101, 102, 103) in a network system (100) according to one of claims 1 to 9, the method comprising the steps:

    defining (201) a set of optimization criterions;

estimating (202) state variables of the hybrid AC/DC-grid (101, 102, 103) by applying a full non-linear security-constrained optimal power flow model;

adjusting (203) control variables of the hybrid AC/DC-grid (101, 102, 103) according to a full non-linear security-constrained optimal power flow model;

wherein the set of optimization criterions comprises: minimal generation cost, minimal losses, minimal voltage angle differences, minimal voltage amplitude deviation, minimal reactive power in the AC grid (110), or minimal redispatch cost, or a combination thereof or minimum number of control actions.

11. The method for controlling a hybrid AC/DC-grid (101, 102, 103) in a network system (100) according to claim 10, wherein:

the step of estimating state variables of the hybrid AC/DC-grid (101, 102, 103) further comprises applying a statistical load model; and

the step of adjusting control variables of the hybrid AC/DC-grid (101, 102, 103) comprises predetermining the control variables for optimizing the power flow in advance.

12. A program element, which, when being executed by a processor of a network control component (104), instructs the hybrid AC/DC-grid (101, 102, 103) to perform the steps (201, 202, 203) of one of claims 10 or 11.

13. A computer readable medium on which a program element according to claim 12 is stored.

Fig. 1

201

202

203

Fig. 2

300

301   302   303

304   305   306   307

Fig. 3

Fig. 4

Europäisches
Patentamt

European
Patent Office

Office européen
des brevets

**EUROPEAN SEARCH REPORT**

Application Number

EP 18 20 7443

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/048150 A1 (CHIANG HSIAO-DONG [US] ET AL) 18 February 2016 (2016-02-18) * the whole document * | 1-13 | INV. H02J5/00 G06Q50/06 |
| X | US 2015/134132 A1 (FENG XIAOMING [US] ET AL) 14 May 2015 (2015-05-14) * the whole document * | 1,10,12, 13 | |
| A | ROGER WIGET ET AL: "Probabilistic security constrained optimal power flow for a mixed HVAC and HVDC grid with stochastic infeed", 2014 POWER SYSTEMS COMPUTATION CONFERENCE, 1 August 2014 (2014-08-01), pages 1-7, XP055288293, DOI: 10.1109/PSCC.2014.7038408 ISBN: 978-83-935-8013-2 * the whole document * | 7,11 | |

TECHNICAL FIELDS
SEARCHED (IPC)

H02J
G06Q

The present search report has been drawn up for all claims

| Place of search | Date of completion of the search | Examiner |
|---|---|---|
| Munich | 21 March 2019 | Annibal, Stewart |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 20 7443

This annex lists the patent family members relating to the patent documents cited in the above-mentioned European search report.
The members are as contained in the European Patent Office EDP file on
The European Patent Office is in no way liable for these particulars which are merely given for the purpose of information.

21-03-2019

| Patent document cited in search report | | Publication date | Patent family member(s) | | | Publication date |
|---|---|---|---|---|---|---|
| US 2016048150 | A1 | 18-02-2016 | NONE | | | |
| US 2015134132 | A1 | 14-05-2015 | GB | 2535395 | A | 17-08-2016 |
| | | | US | 2015134132 | A1 | 14-05-2015 |
| | | | WO | 2015073270 | A2 | 21-05-2015 |

EPO FORM P0459

For more details about this annex : see Official Journal of the European Patent Office, No. 12/82